# EUROPEAN PATENT APPLICATION

(11) **EP 3 540 260 A1**
(43) Date of publication of application: **18.09.2019**
(21) Application number: 19162259.6
(22) Date of filing: 12.03.2019
(51) Int. Cl.: F16D 65/12

(54) **VENTILATED BRAKE DISC**

(30) Priority: 15.03.2018 IT 201800003596
(71) Applicant: Frabetti, Gianni, 40010 Sala Bolognese (Bologna) (IT)
(72) Inventor: Frabetti, Gianni, 40010 Sala Bolognese (Bologna) (IT)
(74) Representative: Puggioli, Tommaso

(57) **Abstract**

Ventilated brake disc, of the type comprising two annular parts (2) separated by a gap and a plurality of tabs (4) arranged in the gap for mutually joining the annular parts (2), wherein the tabs (4) and the annular parts (2) define a plurality of centrifugal ventilation channels (51) and determine a convective cooling airflow in the ventilation channels (51) following a rotation of the brake disc. The tabs (4) and/or the annular parts (2) define respective surfaces of disturbance, facing the ventilation channels (51) and configured to induce turbulence in the cooling airflow.

## Description

The present invention relates to the technical sector of braking systems. In particular, the present invention relates to a ventilated brake disc.

There are known brake discs with ventilated discs (or self-ventilated) in which the braking band is composed of two substantially identical discs, facing each other and integrally joined so as to be separated by a gap within which air is free to circulate.

Unlike full brake discs, wherein during braking the grippers act on both sides of the disc, in self-ventilated brake discs the grippers act on the outer sides of the two discs mentioned above.

This type of disc offers the advantage of greatly increasing the surface of convective heat exchange with the outside air, greatly facilitating cooling and helping to prevent damage and drawbacks related to overheating.

Ventilated brake discs have also been developed and manufactured in which specific guides are formed in the space between the two discs in order to exploit the rotation of the same to determine a centrifugal flow between them, in a way similar to that which occurs in centrifugal compressors, in order to improve convection.

Despite the significant improvement in thermal performance compared to full brake discs, this type of products still suffers from certain drawbacks related to the type of flow that is established between the two discs. For laminar flows, in fact, the fluid is arranged in layers that move at a greater speed away from the wall and, consequently, the layers close to the wall which are to be convectively cooled are responsible for the removal of heat but are themselves subject to a consequent increase in temperature. The amount of heat that they can subtract from the wall is therefore limited by the amount of heat that can be dispersed by conduction, transmitting it to the furthest layers.

In this context, the technical task underlying the present description is to provide a ventilated brake disc which obviates at least some of the drawbacks in the prior art as described above.

In particular, an aim of the present description is to provide a ventilated brake disc capable of improving the convective characteristics of the cooling airflow with respect to the known brake discs, increasing the effectiveness of heat dispersion.

The defined technical task and the specified aims are substantially achieved by a ventilated brake disc, comprising the technical characteristics set forth in one or more of the appended claims.

Further characteristics and advantages of the present description will become more apparent from the indicative, and hence non-limiting, description of a preferred, but not exclusive, embodiment of a ventilated brake disc.

This description is provided herein below with reference to the attached drawings, which are provided solely for the purpose of providing approximate and thus non-limiting examples, and of which:
- figure 1 is a front view of a ventilated brake disc made in accordance with the present description;
- figure 2 shows a section view of the ventilated brake disc of figure 1 cut along the line II-II;
- figure 3 shows an enlarged detail of figure 2;
- figure 4 shows a section view of a detail of the brake disc of figure 1 along a radial plane;
- figure 5 shows a section view of a ventilated brake disc;
- figure 6 shows an enlarged detail of figure 5;

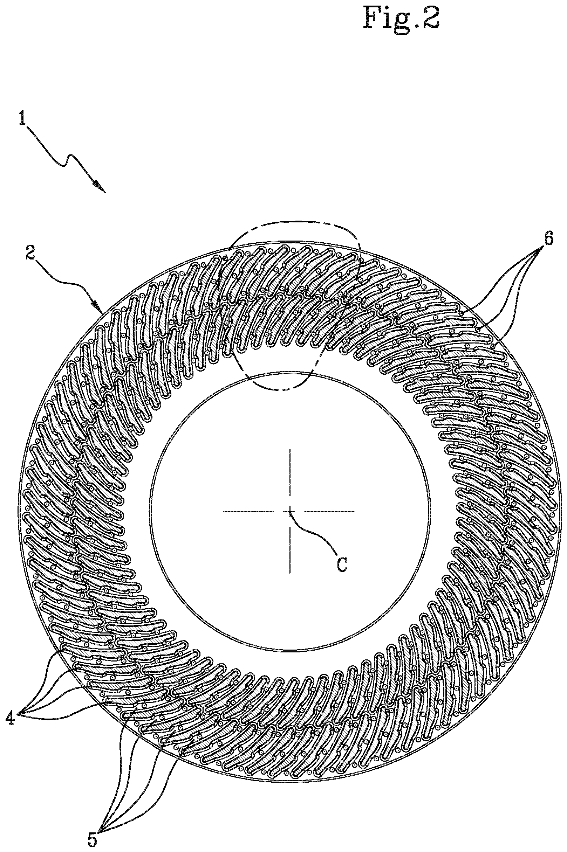

With reference to the figures, a ventilated brake disc in accordance with the present description is generally indicated with the number 1; observing figure 2, the brake disc 1 is intended, in use, to rotate in a counterclockwise direction.

The brake disc 1 comprises two annular parts 2 separated by a gap 3. Both annular parts 2 have a braking surface 2a, arranged towards the outside of the brake disc 1, on the opposite side with respect to the gap 3. A plurality of tabs 4 is arranged in the gap 3 for mutually joining the annular parts 2. In this description, tabs are intended as tapered bodies equipped with a straight or curved main line of extension "S", able to divert an airflow in motion when immersed in it and exchange it with lift forces. In addition, the tabs 4 have a structure suited to the structural joining of the two annular parts 2, configured to ensure the rigidity of the brake disc 1 during use.

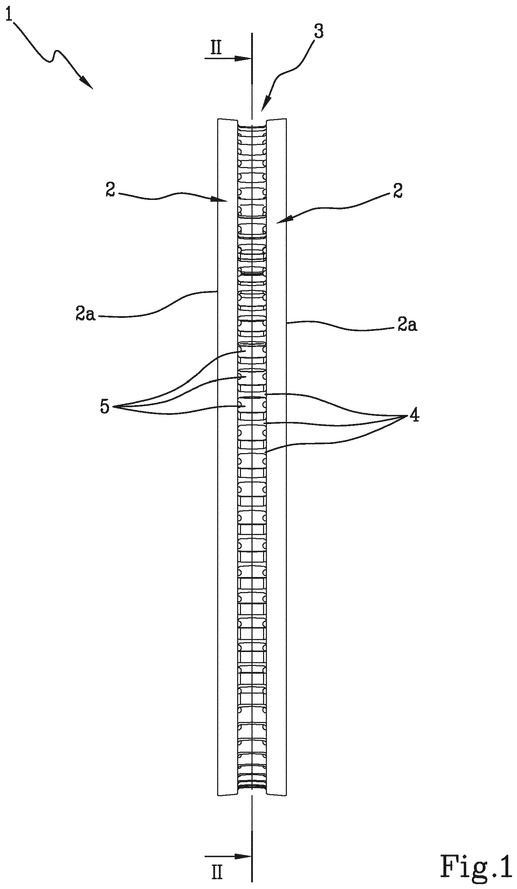

Preferably, the main line of extension "S" of each tab 4 lies in a section parallel to the mid-plane of the gap 3, represented by the line II-II of figure 1.

Each tab 4 is delimited by an outer surface exposed to the airflow, which is conventionally divided into two surfaces, said back 4a and underside 4b, separated from each other (in cross section) by the main line of extension "S" of the tab 4. In particular, the back 4a is, of the two surfaces, the one with greater average convexity (understood as average convexity measured along the chord of the tab 4), while the underside 4b is the one with lesser average convexity or having an average concave or concave profile (always understood as average concavity measured along the chord of the tab 4).

In the brake disc 1 of the present description, the tabs 4 are arranged so as to define, together with the annular parts 2, a plurality of centrifugal ventilation channels 5, each delimited by a back 4a of a tab 4 and by the underside 4b of an adjacent tab 4. Advantageously, the structure of the brake discs 1 thus produced is configured to determine an airflow in the ventilation channels 5 for the convective cooling of the surfaces facing each other on the same. In particular, the centrifugal airflow inside the brake disc 1 is generated by exploiting the same principles of centrifugal compressors.

Advantageously, the brake disc 1 defines, at the tabs 4 or the annular parts 2 (or both), surfaces of disturbance facing the ventilation channels 5 and configured to induce turbulence in the cooling flow inside the same.

The surfaces of disturbance also serve to slow the airflow in a predetermined manner which, by virtue of its staying in contact with the tabs, carries more heat away from the same.

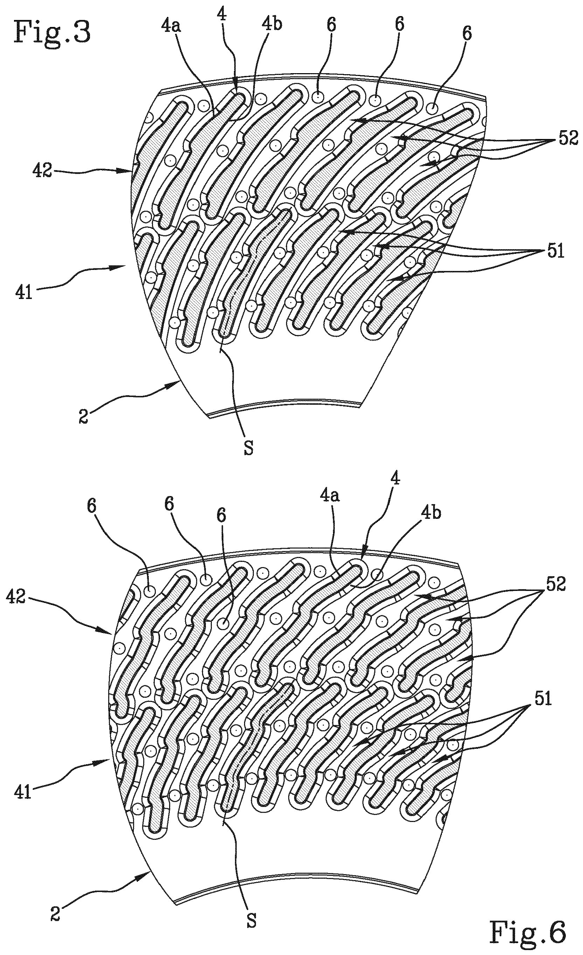

The above-mentioned surfaces of disturbance are determined by a profile of the backs 4a and/or undersides 4b of the tabs 4, which can be irregular. In particular, the surfaces of disturbance are determined by a configuration of the tabs 4, wherein the backs 4a and/or undersides 4b have different surfaces with locally convex geometry followed by surfaces with locally concave geometry (intended as the local concavity and convexity of the surface portion in question), so as not to affect the total convexity or concavity of the single surface as a whole and determine subsequent changes of direction in the flow that flows on it. In particular, in a preferred embodiment illustrated in figures 2 and 3, the backs 4a of the tabs 4 have a variable concave geometry as described above, while the undersides 4b have a conventional and substantially concave geometry.

The geometry of the backs 4a is responsible for regulating the airflow in the channels 5, in particular by slowing it down, while the concave geometry of the undersides 4b serves to facilitate the evacuation of the flow itself.

The combination of these geometries allows an optimum adjustment of the airflow in the ventilation channels, ensuring an adequate slowdown of the same and simultaneous removal of heat but at the same time maintaining an optimal speed for the evacuation from the brake disc.

In the example illustrated in figures 2 and 3, the tabs 4, in particular the backs 4a of the same, are shaped so as to define four flow deceleration points for removal of heat from the tabs 4, and thus from the brake disc 1.

Advantageously, in this way the removal of heat is also uniform along the entire radial extension of the annular parts 2; moreover, the airflow in transit in the ventilation channels 5 is slowed by the backs 4a while it is not hindered by the undersides 4b, obtaining optimum efficiency in the heat exchange between the tabs 4 and the flow itself.

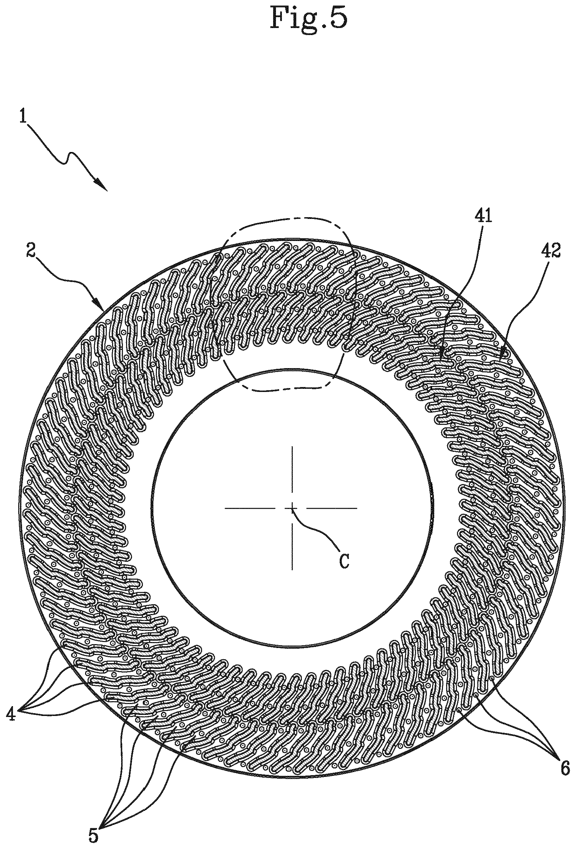

Preferably, in use, the undersides 4b are downstream of the backs 4a according to the direction of rotation of the brake disc 1. A brake disc wherein both the undersides 4b and the backs 4a of the tabs 4 have a geometry of variable concavity is illustrated in figures 5 and 6.

The tabs 4 of figures 5 and 6 have substantially constant thickness with respect to their main line of extension "S", as shown in figure 6, and the main line of extension "S" is curved and has a variable radius and direction of curvature along the chord.

In general, the tabs 4 are preferably divided into a series of radially inner tabs 41 and a series of radially outer tabs 42, both circularly distributed relative to the centre "C" of the brake disc 1 and arranged in such a way that the distance from the centre "C" of the series of radially outer tabs 42 is greater than the distance from the centre "C" of the series of radially inner tabs 41.

Advantageously, in this way, the brake disc 1 can be more easily produced with current casting technologies compared to solutions with continuous tabs.

The radially inner tabs 41 define respective radially inner ventilation channels 51, and the radially outer tabs 42 define respective radially outer ventilation channels 52, so that the flow of cooling air flows from the radially inner ventilation channels 51 towards the radially outer ventilation channels 52.

Preferably, the radially outer tabs 42 are offset relative to the radially inner tabs 41 so as to partially obstruct the outlet section of the radially inner ventilation channels 51 and determine a perturbation element of the cooling flow.

Preferably, in the mid-plane of the gap 3, the end of the radially inner tabs 41 furthest away from the centre "C" of the brake disc 1 is substantially tangent to a circumference centred on said centre "C" and the end of the radially external tabs 42 closest to the centre "C" is substantially tangent to the circumference, so that the radially inner tabs 41 have an end portion arranged at an inlet section of the radially outer ventilation channels 52 and that the radially outer tabs 42 have an end portion arranged at an outlet section of the radially inner ventilation channels 51.

In other words, the end of the radially inner tabs 41 furthest away from the centre "C" of the brake disc 1 is substantially superimposed or aligned with the end of the radially outer tabs 42 closest to the centre "C" along a common circumference centred in the centre "C" in such a way that there is a continuity between the radially inner ventilation channels 51 and the radially outer ventilation channels 52.

The centrifugal ventilation channels 5, consisting of the radially inner ventilation channels 51 and the radially outer ventilation channels 52, are therefore substantially continuous or delimited along their radial extension and the airflow in the same is not disturbed in the passage from the radially inner ventilation channels 51 to the radially outer ventilation channels 52.

Advantageously, the continuity between the radially inner ventilation channels 51 and the radially outer ventilation channels 52 ensures that turbulence is not formed in the airflow in transit in the passage from the radially inner ventilation channels 51 and the radially outer ventilation channels 52. Any turbulence could in fact excessively slow down the airflow, if not also the brake disc itself.

Preferably, each tab 4 has a thickness comprised between 1 mm and 5 mm, even more preferably between 2 mm and 4 mm, measured parallel to the mid-plane of the gap 3 and perpendicular to the main line of extension "S" of the respective tab 4.

For example, each tab 4 has a thickness of 3 mm at one of its median sections and 3.5 mm at the annular parts 2.

In at least one embodiment, the brake disc 1 in accordance with the present description comprises a plurality of raised elements 6, arranged in the ventilation channels 5 and defining at least in part the above-mentioned surfaces of disturbance. In particular, this characteristic can be effectively implemented either individually, that is, on a ventilated brake disc 1 having tabs of conventional geometry, or in combination with the tabs 4 and the ventilation channels 5 described above.

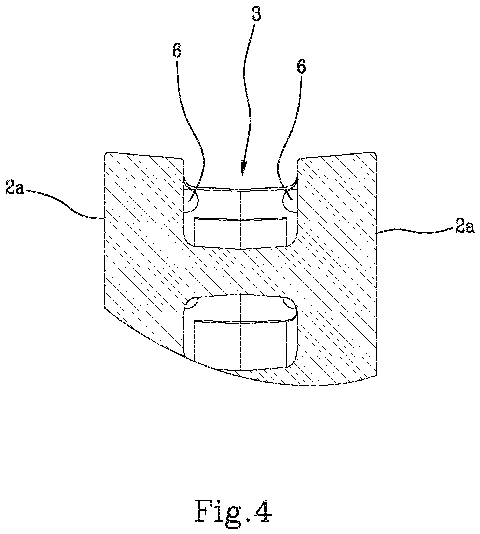

Preferably, the raised elements 6 are surface protrusions of at least one of the annular parts 2, made in one piece together with them, and for example have a substantially hemispherical shape as shown in figure 4, and a height, measured away from the respective annular part 2, comprised between 1 mm and 3 mm, for example they can be 2 mm high. Preferably, the raised elements 6 are surface protrusions of both the annular parts 2 and still more preferably are symmetrically positioned relative to the mid-plane of the gap 3 between them.

In the illustrated embodiments, the raised elements 6 are circularly distributed about the centre "C" of the brake disc 1 and organized in subsequent series, in particular five, wherein each series of raised elements 6 has a different distance from the centre "C" with respect to the others. In the embodiment illustrated in figures 2, 3, 5 and 6, the radial distance between the subsequent series is constant.

Preferably, the ventilation channels 5 have a radially variable cross-section with respect to the centre "C" and the raised elements 6 are arranged at the enlarged sections of said ventilation channels 5, so that the action of the raised elements 6 on the airflow is synergistic with that of the tabs 2.

Advantageously, the raised elements 6 add mass to the brake disc 1 and make it possible, among other things, to standardize the temperatures on the surfaces of the same during use. In particular, the raised elements 6 increase the heat exchange surface of the brake disc 1 at the areas of the same where the tabs 4 are not provided.

The surfaces of disturbance arranged along the ventilation channels favour the rapid transition of the cooling airflow from a laminar boundary layer to a turbulent boundary layer, wherein the various flow layers are continuously stirred so as to lower the temperature of the layers near the surfaces of the annular parts and the tabs to be cooled and promote convection, and increase the level of turbulence of the already-turbulent flows. In particular, the variable concavity/convexity profile of the tabs promotes the detachment of the fluid from the surface of the tabs themselves, so as to generate turbulence in the entire channel, while the presence of the raised elements acts as a local turbulence generator, locally increasing the level of turbulence in the flow.

## Claims

1. A ventilated brake disc (1), of the type comprising two annular parts (2) separated by a gap (3) and a plurality of tabs (4) arranged in said gap (3) for mutually joining said annular parts (2), said tabs (4) and said annular parts (2) defining a plurality of centrifugal ventilation channels (5), a rotation of said brake disc (1) determining a flow of convective cooling of said annular parts (2) in said ventilation channels (5),
said tabs (4) and/or said annular parts (2) defining respective surfaces of disturbance of said cooling flow, facing said ventilation channels (5) and configured to induce turbulence in said cooling flow, said brake disc (1) being **characterized in that** at least one of said tabs (4) comprises a back (4a) having a succession of concave and convex surfaces alternatively adjacent to each other defining at least partly said surfaces of disturbance and a substantially concave underside (4b), said back (4a) and said underside (4b) defining at least partly an outer surface of said tab (4) exposed to said cooling flow.

2. The brake disc (1) according to claim 1, wherein said underside (4b) is, in use, downstream of said back (4a) according to a direction of rotation of said brake disc (1).

3. The brake disc (1) according to claim 1 or 2, wherein said tabs (4) have a main line of extension (S) lying in a section parallel to a mid-plane of the gap (3) between the two annular parts (2), said tabs (4) having a substantially constant thickness relative to said main line of extension (S).

4. The brake disc (1) according to claim 3, wherein said main line of extension (S) is curved and equipped with a radially variable radius and/or direction of curvature relative to the centre (C) of said brake disc (1).

5. The brake disc (1) according to any one of the preceding claims, wherein said plurality of tabs (4) comprises a series of radially inner tabs (41), circularly distributed relative to the centre (C) of said brake disc (1) and defining respective radially inner ventilation channels (51), and a series of radially outer tabs (42), circularly distributed relative to the centre (C) of said brake disc (1) at a greater distance from the centre (C) than said set of radially inner tabs (41) and defining respective radially outer ventilation channels (52).

6. The brake disc (1) according to claim 5, wherein said radially outer tabs (42) are offset relative to said radially inner tabs (41) in such a way as to partially obstruct an outlet section of said radially inner ventilation channels (51).

7. The brake disc (1) according to claim 5 or 6, wherein one end of said radially inner tabs (41) furthest away from the centre (C) of said brake disk (1) is substantially tangent to a circumference centred on said centre (C), one end of said radially outer tabs (42) closest to said centre (C) being substantially tangent to said circumference.

8. The brake disc (1) according to claim 5 or 6, wherein at least one end of said radially inner tabs (41) furthest from the centre (C) of said brake disc (1) is aligned with at least one end of said radially outer tabs (42) closest to said centre (C) along a circumference centred in said centre (C) of said brake disc (1).

9. The brake disc (1) according to any one of the preceding claims, wherein each of said tabs (4) has a thickness comprised between 1 mm and 5 mm, even more preferably between 2 mm and 4 mm, measured parallel to a mid-plane of the gap (3) between the two annular parts (2) and perpendicularly to a main line of extension (S) of the respective tab (4).

10. The brake disc (1) according to any one of the previous claims, comprising a plurality of raised elements (6) positioned in said ventilation channels (5) and defining at least partly the surfaces of disturbance.

11. The brake disc (1) according to claim 10, wherein said raised elements (6) are surface protrusions of at least one of said annular parts (2).

12. The brake disc (1) according to claim 10 or 11, wherein said raised elements (6) are substantially hemispherical in shape.

13. The brake disc (1) according to any one of claims 10 to 12, wherein said raised elements (6) have a height, measured away from the respective annular part (2), comprised between 1 mm and 3 mm.

14. The brake disc (1) according to any one of claims 10 to 13, wherein said raised elements (6) are circularly distributed about the centre (C) of said brake disc (1) and organized in successive series, each series of raised elements (6) having a different distance from the centre (C) with respect to the others.

15. The brake disc (1) according to any one of claims 10 to 14, wherein said raised elements (6) are surface protrusions of both the annular parts (2) and are symmetrically positioned relative to a mid-plane of the gap (3) between said annular parts (2).

16. The brake disc (1) according to any one of claims 10 to 15, wherein said ventilation channels (5) have a radially variable cross section and said raised elements (6) are positioned at widened sections of said ventilation channels (5).
